# DEMANDE DE BREVET EUROPEEN

(11) **EP 0 985 786 A1**
(43) Date de publication de la demande: **15.03.2000**
(21) Numéro de dépôt: 99402185.5
(22) Date de dépôt: 03.09.1999
(51) Int. Cl.: E04H 15/48, E04H 4/10

(54) **Abri léger repliable**

(30) Priorité: 08.09.1998 FR 9811184
(71) Demandeur: Borner, Jacques, 17220 Clavette (FR)
(72) Inventeur: Borner, Jacques, 17220 Clavette (FR)
(74) Mandataire: Dawidowicz, Armand

(57) **Abrégé**

L'invention concerne un abri (1) comportant une armature constituée par une pluralité d'arceaux (2) parallèles susceptibles d'être écartés et rapprochés les uns des autres par la manoeuvre d'éléments de liaison.

Cet abri est caractérisé en ce que les éléments de liaison sont constitués par une poignée de manoeuvre (4), logée entre deux montants (3) d'arceaux (2), et reliée à ces derniers par des biellettes (5) articulées sur la poignée (4) et sur les montants (3) d'arceaux (2) autour d'axes parallèles à l'axe longitudinal desdits montants (3) d'arceaux (2) de manière à délimiter deux trapèzes indéformables formant des ailes dont le déploiement ou respectivement le repliement, sont commandés par un déplacement sensiblement horizontal de la poignée (4).

Application : Abris de piscine.

## Description

La présente invention concerne les abris légers de longueur variable qui sont largement utilisés pour sélectivement couvrir ou découvrir certaines surfaces, telles que par exemple les piscines, les courts de tennis, les aires de stockage ou de travail, etc. en fonction des conditions climatiques.

De tels abris légers comportent une toile supportée par une armature constituée par une pluralité d'arceaux parallèles susceptibles d'être écartés et rapprochés les uns des autres par la manoeuvre d'éléments de liaison.

Un certain nombre d'abris de ce type sont connus. Une première catégorie d'abris présente des arches reliées entre elles par des liaisons de type pantographe. Tel est le cas notamment des abris décrits dans les brevets EP-A-288.441, EP-A-081.606 et US-A-983.701. Ces abris à liaisons pantographes présentent divers inconvénients. En particulier, ce type de liaison ne permet pas d'obtenir une bonne stabilité de l'ensemble, notamment en position dépliée. Par ailleurs, ce type de liaison se révèle particulièrement complexe et présente des inconvénients de pincement de toile et de risque de blessure de l'utilisateur.

Un autre type de liaison s'étendant essentiellement dans un plan vertical est décrit dans le brevet FR-A-2.672.925. Dans ce cas, la liaison entre lesdits arceaux est constituée essentiellement par une barre de manoeuvre se déplaçant verticalement, des parallélogrammes déformables constitués de biellettes étant disposés de part et d'autre de ladite barre de manoeuvre. L'inconvénient d'une telle liaison est que, en position repliée, la barre de manoeuvre fait saillie au-delà du faîtage de l'abri. Il en résulte un encombrement important de l'abri en position repliée.

Un autre type de liaison est encore décrit dans le brevet US-A-4448529. Dans ce document, les arceaux sont reliés entre eux au moyen d'une structure en ciseaux maintenue en position déployée au moyen d'une barre de verrouillage qui doit être montée ou démontée à chaque manoeuvre. Par ailleurs, il est prévu des éléments de raidissement supplémentaires tels que des cadres articulés sur les montants d'arceaux et verrouillés entre eux uniquement en position déployée au moyen d'un crochet. Ces éléments de raidissement peuvent encore être constitués d'une barre reliant deux montants d'arceaux, cette barre comportant dans sa portion médiane deux articulations verrouillables par une pièce coulissante. Une telle structure oblige l'utilisateur à agir sur un grand nombre d'éléments pas toujours aisément accessibles pour assurer le déploiement ou le repliement de la structure. En outre, les risques de blessures de l'utilisateur sont nombreux.

On connaît enfin par le document US-A-3230962, une structure dont la liaison entre éléments de structure est constituée par deux cadres, l'un ouvert, l'autre fermé, ces cadres sensiblement trapézoidaux étant articulés par leur grande base sur un élément de structure et solidarisés entre eux par leur petite base au moyen d'un axe d'articulation commun. L'un des cadres est déformable pour assurer le maintien des cadres en position déployée de sorte qu'un repliement intempestif est possible. Par ailleurs cette nécessité d'une déformation amène à la réalisation d'une structure peu solide. De même, l'articulation des deux cadres autour d'un axe commun oblige à la réalisation de deux cadres différenciés pour réduire l'encombrement de l'ensemble. Enfin, la manoeuvre de repliement est difficile car elle nécessite simultanément une déformation de l'un des trapèzes et une poussée sur les deux trapèzes.

Le but de la présente invention est donc de supprimer les inconvénients précités en proposant un abri dont le déploiement et le repliement sont quasi-instantanés, n'endommagent pas la toile, sont sans risque pour l'opérateur et permettent une stabilité parfaite en position déployée ou repliée de l'abri sans moyen de serrage particulier des éléments de liaison entre arceaux.

Un autre but de l'invention est de proposer un abri dont la liaison entre arceaux est conçue de manière telle que la fabrication des éléments la constituant est facilitée et que son encombrement, en particulier en position repliée, est réduit.

A cet effet, l'invention a pour objet un abri léger de longueur variable, notamment pour installations sportives, telles que des piscines, comportant une toile supportée par une armature constituée par une pluralité d'arceaux parallèles susceptibles d'être écartés et rapprochés les uns des autres par la manoeuvre d'éléments de liaison, caractérisé en ce que lesdits éléments de liaison entre deux arceaux adjacents sont constitués par une poignée de manoeuvre logée entre deux montants latéraux des arceaux , et de deux jeux de biellettes reliant chacun la poignée de manoeuvre à un montant latéral d'arceau , ces biellettes étant articulées sur la poignée et sur les montants d'arceaux autour d'axes parallèles à l'axe longitudinal desdits montants d'arceaux, les axes d'articulation de chaque jeu de biellettes sur la poignée de manoeuvre étant non confondus d'un jeu de biellettes à un autre de manière à délimiter deux quadrilatères identiques indéformables dont l'un des côtés est constitué par la poignée de manoeuvre, ces quadrilatères formant des ailes dont le déploiement ou respectivement le repliement, en vue d'un écartement, ou respectivement, d'un rapprochement des arceaux de l'armature, est commandé par un déplacement sensiblement horizontal de la poignée en direction de l'extérieur ou respectivement de l'intérieur de l'abri .

Grâce à cette conception des éléments de liaison entre arceaux, l'encombrement de ces éléments de liaison en position repliée de l'abri est réduit tout en offrant une bonne stabilité de l'abri en position déployée ou repliée car la poignée de manoeuvre et les biellettes sont constamment maintenues solidaires. Par ailleurs la conception de la liaison facilite sa fabrication et son montage car toutes les biellettes sont identiques. Enfin, le déploiement et le repli de la structure sont commandés uniquement par simple traction ou poussée exercée sur la poignée de manoeuvre.

Selon une forme de réalisation préférée de l'invention, au moins les extrémités des biellettes articulées sur la poignée de manoeuvre coopèrent entre elles pour délimiter, en position déployée de l'armature, un logement apte à recevoir un organe de verrouillage, tel qu'une goupille, introduit dans ledit logement par un perçage traversant de la poignée, ledit organe de verrouillage empêchant, lors d'une poussée exercée sur la poignée de manoeuvre, le déplacement par pivotement des biellettes.

Grâce à cette conception de l'organe de verrouillage, il devient aisé de verrouiller automatiquement les éléments de liaison en position déployée de l'abri sans que l'utilisateur n'ait à se préoccuper de ce verrouillage.

Par ailleurs, grâce à cette conception, tout risque de repliement intempestif de l'abri est empêché.

Selon une autre forme de réalisation préférée de l'invention, les axes d'articulation des biellettes sur la poignée de manoeuvre , en position déployée des ailes, sont disposés, en prenant l'abri comme référence, à l'extérieur du plan passant par les axes d'articulation des biellettes sur les montants latéraux d'arceaux pour nécessiter , lors du repliement des ailes, le passage d'un point mort. Cette configuration participe au même but que celui décrit ci-dessus. Par ailleurs, grâce à cette conception, on réalise un pré-verrouillage de la structure par simple action sur la poignée de manoeuvre.

L'invention sera bien comprise à la lecture de la description suivante d'exemples de réalisation, en référence aux dessins annexés dans lesquels :
la figure 1 représente une vue en perspective d'un abri conforme à l'invention ;
la figure 2 représente une vue de face des éléments de liaison entre deux arceaux adjacents déployés ;
la figure 3 représente une vue de côté des éléments de liaison entre deux arceaux adjacents repliés ;
la figure 4 représente une vue de face de la poignée de manoeuvre ;
la figure 5 représente une vue en coupe suivant AA de la figure 4 ;
la figure 6 représente une vue partielle de face d'un support fixe de la liaison à pivot d'une biellette sur un montant d'arceau et
la figure 7 représente une vue en coupe suivant AA de la figure 6.

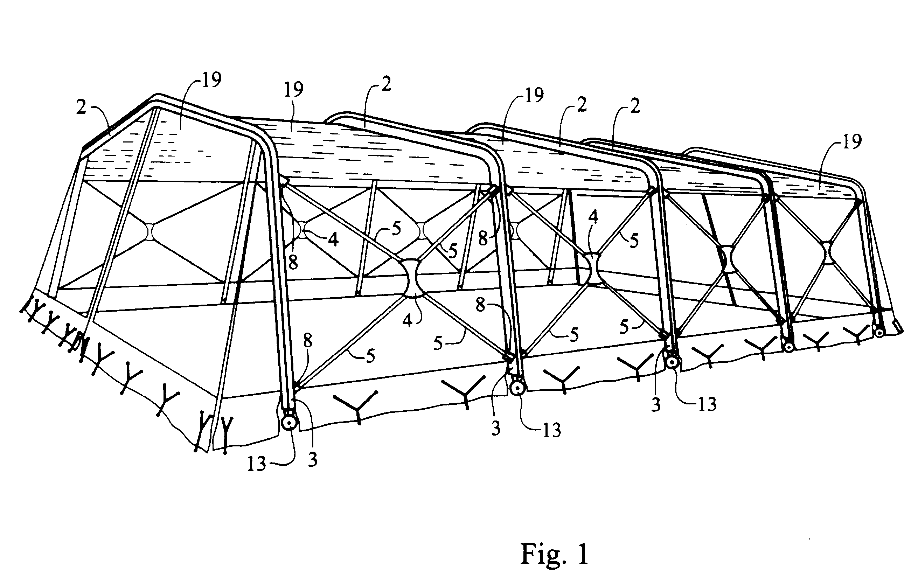

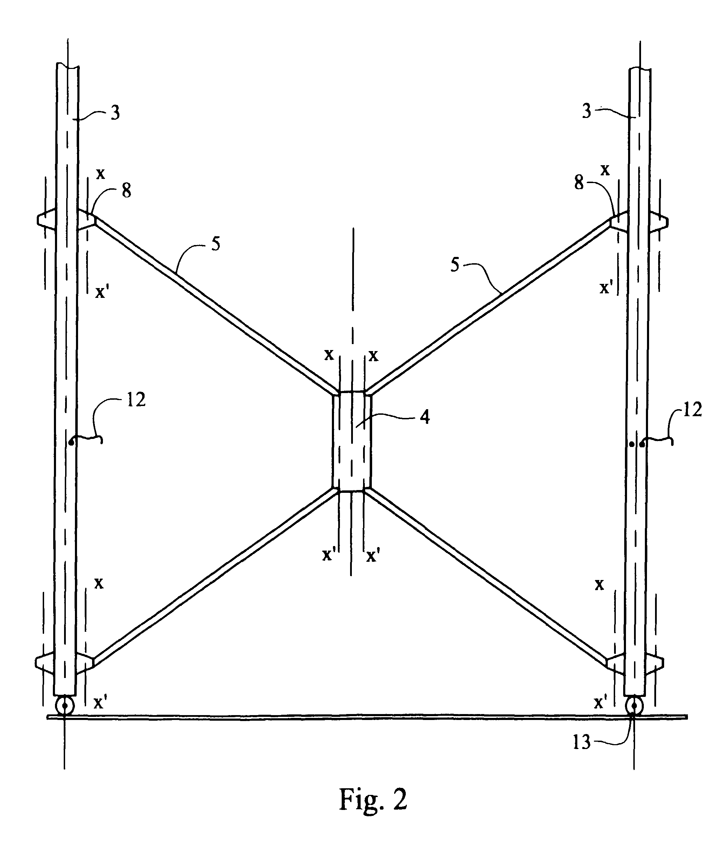

Conformément à la figure 1, l'abri, représenté par la référence générale 1, comporte des arceaux 2 disposés parallèles les uns par rapport aux autres, une toile 19 supportée par lesdits arceaux 2 et des éléments de liaison 4, 5 entre les arceaux. Les arceaux 2, identiques ou non, sont constitués par deux montants 3 reliés entre eux par un sommet de forme quelconque. Les éléments de liaison 4, 5 ainsi que la toile 19 sont fixés sur les faces latérales en regard des montants 3 d'arceaux 2 de manière à faciliter la manipulation de l'ensemble. Les éléments de liaison entre deux arceaux adjacents comprennent une poignée de manoeuvre 4 logée entre lesdits montants 3 latéraux des arceaux 2. Cette poignée de manoeuvre 4 est reliée auxdits arceaux 2 par des biellettes 5 articulées d'une part sur la poignée 4 et d'autre part sur les montants 3 d'arceaux 2 par l'intermédiaire de supports fixes 8. Ces biellettes 5 sont articulées autour d'axes X, X' parallèles à l'axe longitudinal desdits montants 3 d'arceaux 2. Un premier jeu de biellettes 5 constitué par les biellettes s'étendant entre la poignée de manoeuvre 4 et un premier montant 3 d'arceau 2 est articulé sur la poignée 4 autour d'un axe XX' qui est parallèle et non confondu avec l'axe d'articulation XX' des biellettes 5 d'un second jeu de biellettes 5 qui relie cette même poignée de manoeuvre à un montant d'arceau adjacent audit premier montant. Cette construction est particulièrement visible à la figure 2 où l'on constate que les axes d'articulation des premier et second jeux de biellettes sur la poignée 4 sont non confondus. Ceci permet d'une part, de réaliser des biellettes identiques tout en obtenant un encombrement réduit en position repliée de la structure, d'autre part, de n'agir que sur la poignée de manoeuvre pour le déploiement ou le repli de la structure. De préférence, la poignée de manoeuvre 4 est située à équidistance de deux arceaux 2 adjacents.

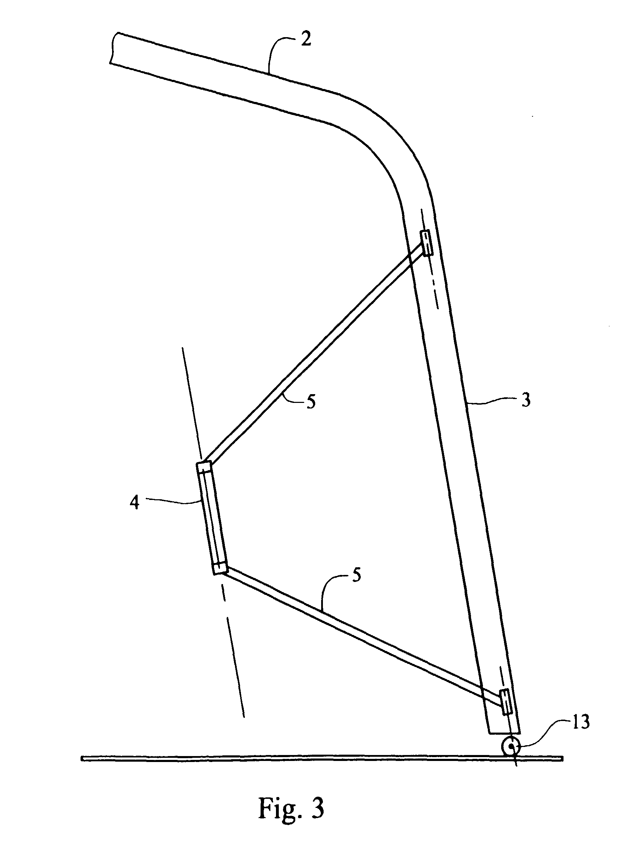

Biellettes 5, montants 3 d'arceaux 2 et poignée de manoeuvre 4 délimitent entre eux deux quadrilatères identiques et indéformables bien que leurs sommets soient articulés. En effet la figure géométrique délimitée par chaque quadrilatère est toujours la même indépendamment de l'écartement des montants d'arceaux. Par ailleurs ces quadrilatères sont toujours maintenus solidaires par la poignée de manoeuvre 4 qui constitue un côté de chaque quadrilatère. Ces quadrilatères affectent de préférence la forme de trapèzes indéformables dont la petite base est constituée par le corps de la poignée de manoeuvre 4 comme le montre la figure 2. Ces deux trapèzes indéformables forment des ailes dont le déploiement, ou respectivement le repliement, en vue d'un écartement, ou respectivement, d'un rapprochement des arceaux 2 de l'armature, est commandé par un déplacement sensiblement horizontal de la poignée 4 en direction de l'extérieur, ou respectivement, de l'intérieur de l'abri 1. La position repliée est représentée à la figure 3.

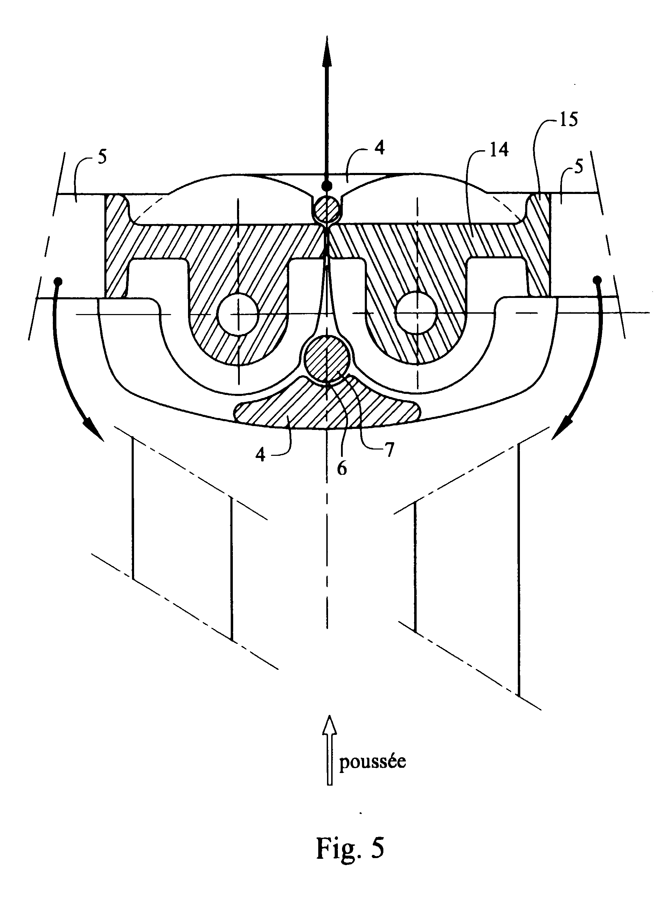

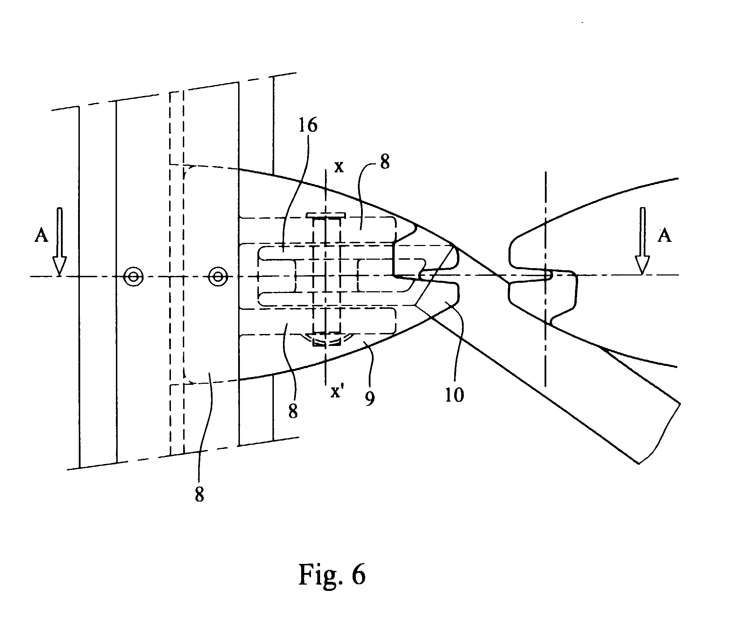

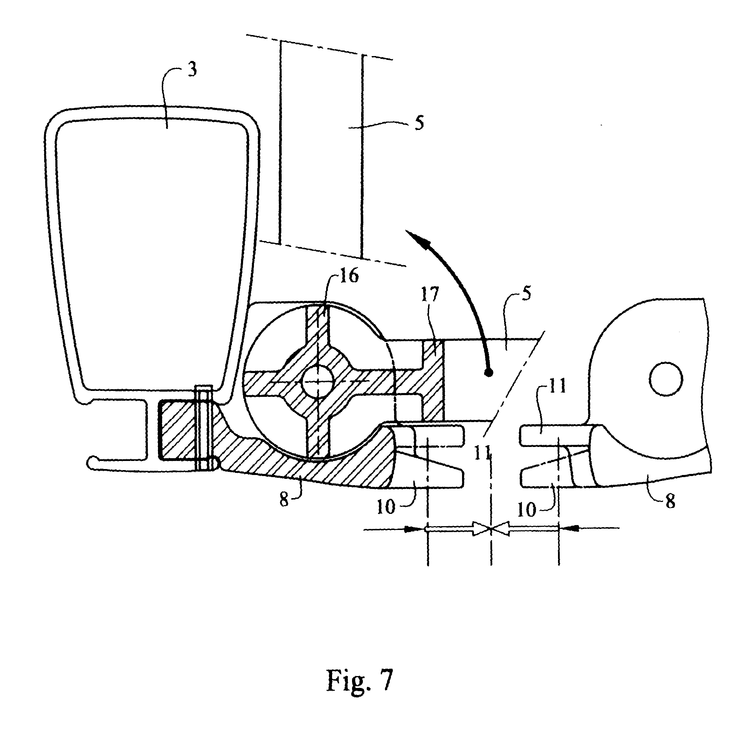

Généralement, l'abri 1 comporte, entre deux arceaux 2 adjacents, au moins quatre biellettes 5, les supports fixes 8 de la liaison à pivot reliant chacune des biellettes 5 aux montants 3 d'un arceau 2 étant identiques. De ce fait, la fabrication de l'abri 1 est facilitée et son coût est réduit. Les supports fixes 8 de la liaison à pivot et la liaison à pivot elle-même de la biellette 5 sont représentés aux figures 6 et 7. Ces articulations à pivot peuvent comporter un support fixe 8 ou palier-guide, affectant la forme d'un U, dont l'âme 9, formant butée pour une biellette 5, s'étend sensiblement perpendiculairement à la face latérale du montant 3 d'arceau 2 comme le montre les figures 6 et 7. Le bord libre de cette âme 9 comporte au moins deux doigts 10, 11 superposés et décalés pour affecter sensiblement la forme d'un V. Du fait de la superposition des doigts dans un plan vertical et de leur décalage par rapport à ce plan vertical de manière à s'étendre de part et d'autre de ce plan, on constate que le V est formé dans un plan oblique. Ces doigts 10, 11 sont agencés pour coopérer avec deux doigts du support fixe 8 d'une liaison à pivot d'un arceau 2 adjacent pour, en position rapprochée des arceaux, s'entrecroiser de manière à assurer une immobilisation transversale, axiale et longitudinale desdits arceaux 2. Les branches du U du support fixe 8 enserrent la tête 16 de l'articulation à pivot. En effet, cette articulation à pivot comporte généralement une tête 16 partiellement cylindrique prolongée d'un corps 17 qui vient s'emboîter dans le bras qui relie la poignée de manoeuvre 4 au montant de l'arceau. Cette tête 16 comporte généralement un alésage traversé par un axe lisse qui traverse également les branches du support fixe 8 et qui se termine à ses deux extrémités par des rondelles de blocage rapide. Cet axe est parallèle à l'axe XX'. Ce bras est par ailleurs pourvu à son autre extrémité, de manière analogue d'une articulation à pivot excentré. Cette articulation à pivot est à nouveau constituée d'une tête 14 d'articulation prolongée d'un corps 15 venant s'emboîter dans le bras qui relie la poignée de manoeuvre 4 au montant de l'arceau. Dans ce cas, le palier guide de l'articulation à pivot est constitué par le corps de la poignée de manoeuvre. Du fait que les biellettes 5 présentent un axe d'articulation sur la poignée 4 décalé axialement par rapport à l'axe longitudinal du corps ou bras de la biellette comme le montre la figure 5, les ailes doivent franchir un point mort lors de leur passage de la position déployée à la position repliée. Ce point mort correspond au point où l'ensemble des axes XX' d'articulation des biellettes 5 sur la poignée 4 ou sur les montants 3 sont dans un même plan. Cette construction empêche ou limite un repliement non souhaité de la structure. L'ensemble têtes d'articulation 14, 16, corps 15, 17 et bras constitue la biellette représentée par la référence générale 5.

Les doigts 10, 11 du support fixe 8 décrits ci-dessus sont maintenus en position entrecroisée par un verrou 12. Ce verrou 12 est, dans l'exemple représenté à la figure 2, constitué par un simple crochet. Ces doigts 10, 11 sont par ailleurs, en position entrecroisée verrouillée, conformés pour permettre un déplacement des arceaux 2 dans une position autorisant le déploiement des éléments de liaison disposés sur les montants des arceaux opposés à ceux maintenus en position rapprochée verrouillée. Cela permet ainsi le déploiement d'un côté de l'abri alors que l'autre côté de l'abri est maintenu en position verrouillée. En position déployée, grâce à ce type d'articulation, on obtient une structure d'abri parfaitement rigide. En effet, les biellettes 5 peuvent, grâce à leur articulation excentrée sur la poignée de manoeuvre 4 ou sur les montants des arceaux, former un V dont la pointe, dirigée vers l'extérieur de l'abri, se situe au-delà du plan vertical contenant les axes d'articulation X, X' des biellettes sur les montants d'arceaux en position déployée de l'abri. De ce fait, tout risque de repli intempestif de l'abri est évité. Par ailleurs, la disposition des biellettes 5, formant avec la poignée de manoeuvre 4 et les montants 3 d'arceaux 2 des trapèzes indéformables, permet d'obtenir une grande rigidité de la structure, les biellettes constituant alors des biellettes de triangulation. Il est à noter que les bras servant à la réalisation des biellettes 5 peuvent être constitués par exemple par des tubes à section carrée en aluminium.

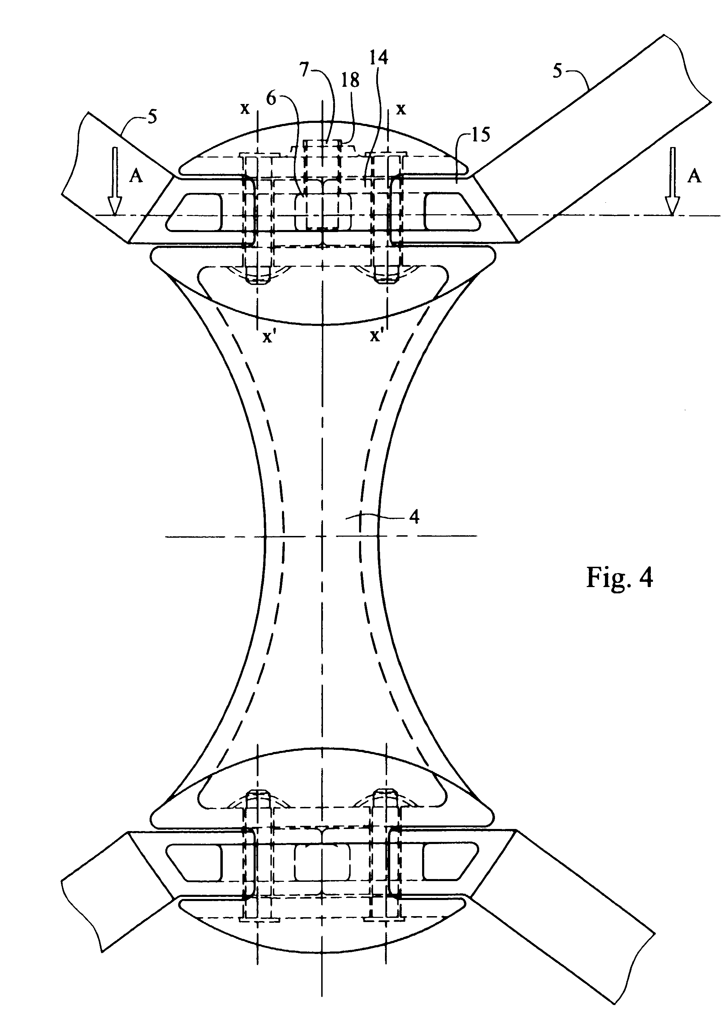

Comme le montrent les figures 4 et 5, pour garantir le maintien de la structure en position déployée, au moins les extrémités des biellettes 5 articulées sur la poignée de manoeuvre 4 coopèrent entre elles pour délimiter, en position déployée de l'armature de l'abri 1, un logement 6 apte à recevoir un organe de verrouillage 7, tel qu'une goupille. Cet organe de verrouillage 7 est introduit dans ledit logement 6 par un perçage traversant 18 de la poignée 4. Cet organe de verrouillage 7 empêche, lors d'une poussée involontaire exercée sur la poignée de manoeuvre 4, le déplacement par pivotement des biellettes 5. De préférence, le perçage traversant 18 de la poignée 4, à travers lequel l'organe de verrouillage 7 est introduit dans le logement 6, est disposé au-dessus du logement 6 de sorte que, lorsque, en position déployée, logement 6 et perçage traversant sont alignés, l'organe de verrouillage 7 vient automatiquement par gravité se positionner dans le logement 6 sans intervention de l'utilisateur. On obtient ainsi un verrouillage automatique de l'armature de l'abri en position déployée de ladite armature.

Enfin et de manière classique, les extrémités inférieures des montants 3 d'arceaux 2 sont équipées de moyens de déplacement, de préférence amovibles, tels que des roues 13 pivotantes. Ces roues pivotantes facilitent le déplacement des arceaux les uns par rapport aux autres ainsi que le déplacement de l'ensemble de la structure vers une aire de stockage. Selon l'utilisation de l'abri, il est possible de remplacer ces roues par des patins qui coulissent à l'intérieur de rails fixés au sol de manière amovible.

La toile 19 de l'abri 1 est quant à elle fixée à l'intérieur de l'abri en arrière des supports fixes 8 de la liaison à pivot reliant chacune des biellettes 5 au montant 3 d'arceau 2. Etant donné la disposition des moyens de fixation de la toile, cette dernière se retrouve située à l'intérieur de l'abri. Cette toile, éventuellement doublée, est de préférence en un matériau transparent.

Le passage de la position repliée à la position déployée de l'armature est réalisé par écartement desdits arceaux 2 après enlèvement du crochet 12 puis action sur la poignée de manoeuvre 4 par traction sur cette dernière. Cette manipulation est généralement manuelle. En position déployée de l'abri, l'organe de verrouillage 7 est automatiquement positionné dans le logement 6. Il devra être enlevé manuellement de ce logement 6 pour permettre le repli de l'abri.

Lorsque l'abri se trouve en position déployée conformément à la figure 1, une poussée sur la poignée de manoeuvre 4 provoque une inversion du V formé par les biellettes 5. Ce V dont la pointe est dirigée vers l'extérieur de l'abri, au-delà du plan contenant les axes XX' d'articulation des biellettes 5 sur les montants 3 d'arceaux 2, franchit un point qui correspond à un écartement maximal des arceaux. Lorsque ce point est franchi, la pointe est inversée, le V est disposé désormais avec sa pointe à l'intérieur de l'abri. La poursuite d'un déplacement sensiblement horizontal de la poignée de manoeuvre 4 en direction de l'intérieur de l'abri entraîne un rapprochement des arceaux 2. Une fois les arceaux 2 en position de rapprochement maximal, ils sont reliés les uns aux autres par l'intermédiaire des crochets 12 afin d'assurer leur solidarisation. Les doigts 10, 11 sont alors en position entrecroisée verrouillée, ce qui empêche tout risque de renversement des arceaux. Dans cette position repliée, la toile est rangée automatiquement en accordéon à l'intérieur de l'abri en épousant le déplacement de la poignée 4.

## Revendications

1. Abri (1) léger de longueur variable, notamment pour installations sportives, telles que des piscines, comportant une toile supportée par une armature constituée par une pluralité d'arceaux (2) parallèles susceptibles d'être écartés et rapprochés les uns des autres par la manoeuvre d'éléments de liaison,
caractérisé en ce que lesdits éléments de liaison entre deux arceaux (2) adjacents sont constitués par une poignée de manoeuvre (4), logée entre deux montants (3) latéraux des arceaux (2), et de deux jeux de biellettes (5) reliant chacun la poignée de manoeuvre (4) à un montant (3) latéral d'arceau (2), ces biellettes (5) étant articulées sur la poignée (4) et sur les montants (3) d'arceaux (2) autour d'axes parallèles à l'axe longitudinal desdits montants (3) d'arceaux (2),les axes d'articulation de chaque jeu de biellettes (5) sur la poignée de manoeuvre (4) étant non confondus d'un jeu de biellettes (5) à un autre de manière à délimiter deux quadrilatères identiques indéformables dont l'un des côtés est constitué par la poignée de manoeuvre (4), ces quadrilatères formant des ailes dont le déploiement ou respectivement le repliement, en vue d'un écartement, ou respectivement, d'un rapprochement des arceaux (2) de l'armature, est commandé par un déplacement sensiblement horizontal de la poignée (4) en direction de l'extérieur ou respectivement de l'intérieur de l'abri (1).

2. Abri selon la revendication 1,
caractérisé en ce que les axes d'articulation des biellettes (5) sur la poignée de manoeuvre (4), en position déployée des ailes, sont disposés à l'extérieur du plan passant par les axes d'articulation des biellettes (5) sur les montants (3) latéraux d'arceaux (2) pour nécessiter , lors du repliement des ailes, le passage d'un point mort.

3. Abri selon l'une des revendications 1 et 2,
caractérisé en ce qu'au moins les extrémités des biellettes (5) articulées sur la poignée de manoeuvre (4) coopèrent entre elles pour délimiter, en position déployée de l'armature, un logement (6) apte à recevoir un organe de verrouillage (7), tel qu'une goupille, introduit dans ledit logement (6) par un perçage traversant (18) de la poignée (4), ledit organe de verrouillage (7) empêchant, lors d'une poussée involontaire exercée sur la poignée de manoeuvre (4), le déplacement par pivotement des biellettes (5).

4. Abri selon la revendication 3,
caractérisé en ce que le perçage traversant (18) de la poignée (4), à travers lequel l'organe de verrouillage (7) est introduit dans le logement (6), est disposé au-dessus du logement (6) de sorte que, lorsque, en position déployée, logement (6) et perçage traversant sont alignés, l'organe de verrouillage (7) vient automatiquement par gravité se positionner dans le logement (6) sans intervention de l'utilisateur.

5. Abri selon l'une des revendications 1 à 4,
caractérisé en ce que le support fixe (8) de la liaison à pivot reliant une biellette (5) au montant (3) d'un arceau (2) est constitué par un palier-guide, généralement en forme de U, dont l'âme (9) formant butée pour une biellette (5) s'étend sensiblement perpendiculairement à la face latérale du montant (3) d'arceau (2), le bord libre de cette âme (9) comportant au moins deux doigts (10, 11) superposés et décalés pour affecter sensiblement la forme d'un V, lesdits doigts (10, 11) étant agencés pour coopérer avec deux doigts du support fixe d'une liaison à pivot d'un arceau adjacent pour, en position rapprochée des arceaux s'entrecroiser de manière à assurer une immobilisation transversale, axiale et longitudinale desdits arceaux (2).

6. Abri selon la revendication 5,
caractérisé en ce que les doigts (10, 11) sont maintenus en position entrecroisée par un verrou (12).

7. Abri selon l'une des revendications 5 et 6,
caractérisé en ce que les doigts (10, 11), en position entrecroisée verrouillée, sont conformés pour permettre un déplacement des arceaux (2) dans une position autorisant le déploiement des éléments de liaison disposés sur les montants des arceaux opposés à ceux maintenus en position rapprochée verrouillée.

8. Abri selon l'une des revendications 5 à 7,
caractérisé en ce qu'il comporte, entre deux arceaux (2) adjacents, au moins quatre biellettes (5), les supports fixes (8) de la liaison à pivot reliant chacune des biellettes (5) au montant (3) d'un arceau (2) étant identiques.

9. Abri selon l'une des revendications 1 à 8,
caractérisé en ce que les quadrilatères délimités par la poignée de manoeuvre (4), les jeux de biellettes (5) et les montants (3) latéraux d'arceaux (2) affectent la forme d'un trapèze indéformable dont la petite base est constituée par la poignée de manoeuvre (4).

10. Abri selon l'une des revendications 1 à 9,
caractérisé en ce que la toile éventuellement doublée, de préférence en un matériau transparent, est fixée à l'intérieur de l'armature.
